# EUROPEAN PATENT APPLICATION

(11) **EP 4 530 696 A1**
(43) Date of publication of application: **02.04.2025**
(21) Application number: 23835354.4
(22) Date of filing: 26.06.2023
(51) Int. Cl.: G02B 26/10, G02B 26/08

(54) **MIRROR DRIVE DEVICE, LIGHT SOURCE DEVICE, OPTICAL SCANNING DEVICE, AND CORRECTION METHOD**

(30) Priority: 06.07.2022 JP 2022109156
(71) Applicant: Stanley Electric Co. Ltd., Tokyo 153-8636 (JP)
(72) Inventor: MATSUMARU Naoya, Tokyo 153-8636 (JP)
(74) Representative: Pritzlaff, Stefanie Lydia
(86) International application number: PCT/JP2023/023550
(87) International publication number: WO 2024/009820

(57) **Abstract**

A mirror drive device 10 includes a MEMS mirror 20, a MEMS drive unit 30 that outputs a drive signal to the MEMS mirror 20 to drive the MEMS mirror 20, a MEMS sensor unit 40 that outputs a sensor signal corresponding to a deflection angle of the MEMS mirror 20, a MEMS sensor correction circuit 126 having the same response delay time as the MEMS sensor unit 40, and a delay processing unit 110 that inputs a delay detection signal to the MEMS sensor correction circuit 126 to compute an output delay.

## Description

### Technical Field

The present invention relates to a mirror drive device that drives a MEMS mirror, a light source device that causes a light source to emit light, an optical scanning device that includes the mirror drive device and the light source device, a correction method of a mirror drive timing, and a correction method of a light source drive timing.

### Background Art

In the related art, a light deflector that scans light to project a video is known to have a mirror portion manufactured by a micro electro mechanical system (MEMS) technique. In a case of projection, the light source is controlled to be turned on or off according to displacement of the mirror portion.

In addition, a technique of detecting a delay in response to a drive signal of a mirror portion and a delay in response to a control signal of a light source by various sensors and correcting the delay is also well known.

For example, an image projection device of Patent Document 1 includes a compensation circuit, an optical sensor, and a temperature sensor in addition to a LD module, an optical scanning unit, and an optical system inside a housing. The optical system includes three reflective mirrors and a concave mirror.

A detection unit of the compensation circuit detects a phase shift of laser light in a horizontal scanning direction and a deflection angle change of the MEMS mirror, respectively, in accordance with a shift of a first pixel (a pixel detected by the optical sensor in a forward path of horizontal scanning of the laser light) from a desired value and a shift of a second pixel (a pixel detected by the optical sensor in the same backward and forward path) from a desired value, which are detected by the optical sensor (Patent Document 1/paragraphs 0016, 0026, 0027, and 0036, and FIGS. 2 and 4).

### Citation List

### Patent Literature

Patent Document 1: Japanese Patent No. 6978659

### Summary of Invention

### Technical Problem

In order to correct the driving of the mirror portion and the lighting timing of the laser light, it is necessary to first detect the laser light using the optical sensor and adjust the lighting timing of the laser light based on the information. In this case, the information about a driving state of the mirror acquired from a sensor that detects the driving state of the mirror portion includes a delay in response of the sensor itself.

Similarly, the information about the lighting timing acquired from the sensor that detects the lighting timing of the laser light includes a delay in response of the sensor itself.

In addition, the optical sensor or a sensor circuit has individual response characteristics, and the delay in the response may vary depending on an operating frequency of the device or the ambient temperature. Therefore, the variation may affect the correction of the lighting timing.

The present invention has been made in view of such circumstances, and an object of the present invention is to provide a mirror drive device capable of accurately correcting a delay in a response time or driving control of a mirror and a light source regardless of a driving condition or an ambient temperature.

### Solution to Problem

To achieve the object, a mirror drive device according to an aspect of the present invention includes: an optical scanner having a mirror configured to scan light; an optical scanner drive unit configured to output a drive signal to the optical scanner to drive the optical scanner; an optical scanner sensor unit configured to output an optical scanner sensor signal corresponding to a deflection angle of the optical scanner; an optical scanner sensor correction unit having the same response delay time as the optical scanner sensor unit; and a delay processing unit configured to input a delay detection signal to the optical scanner sensor correction unit to compute an output delay.

The mirror drive device according to the aspect of the present invention drives an optical scanner to scan light. In this case, the mirror drive device includes an optical scanner sensor unit, an optical scanner sensor correction unit, and a delay processing unit. The optical scanner sensor unit outputs an optical scanner sensor signal corresponding to a deflection angle of the optical scanner (mirror), so that the deflection angle of the mirror in operation can be detected.

The delay processing unit inputs the delay detection signal to the optical scanner sensor correction unit and computes the output delay. The optical scanner sensor correction unit has the same response delay time as the optical scanner sensor unit. The expression "same response delay time" herein is not limited to the completely same time and includes a substantially same time.

By using the delay time computed by the delay processing unit, it is possible to accurately correct the delay of the response time of the optical scanner regardless of a driving condition or an ambient temperature.

In addition, a light source device according to an aspect of the present invention includes: a light source; a light source drive unit configured to output a drive signal to the light source to cause the light source to emit light; an optical sensor unit configured to detect the light from the light source to output an optical sensor signal; an optical sensor correction unit having the same response delay time as the optical sensor unit; and a delay processing unit configured to input a delay detection signal to the optical sensor correction unit to compute an output delay.

In the light source device according to the present invention, the light source drive unit outputs a drive signal to the light source to cause the light source to emit light. The light source device includes an optical sensor unit, an optical sensor correction unit, and a delay processing unit. Since the optical sensor unit detects the light from the light source to output an optical sensor signal, a light emission timing can be detected.

The delay processing unit inputs the delay detection signal to the optical sensor correction unit to compute the output delay. Since the optical sensor correction unit has the same response delay time as the optical sensor unit, by using the delay time computed by the delay processing unit, it is possible to accurately correct the delay in the response time of the light source regardless of the driving condition or the ambient temperature.

In addition, an optical scanning device according to an aspect of the present invention includes:
an optical scanner having a mirror configured to scan light; an optical scanner drive unit configured to output a drive signal to the optical scanner to drive the optical scanner; an optical scanner sensor unit configured to output an optical scanner sensor signal corresponding to a deflection angle of the optical scanner; an optical scanner sensor correction unit having the same response delay time as the optical scanner sensor unit;
a light source; a light source drive unit configured to output a light source drive signal to the light source to cause the light source to emit light; an optical sensor unit configured to detect the light from the light source to output an optical sensor signal; an optical sensor correction unit having the same response delay time as the optical sensor unit; and a delay processing unit configured to input a delay detection signal to at least one of the optical scanner sensor correction unit and the optical sensor correction unit to compute an output delay of each of the optical scanner sensor correction unit and the optical sensor correction unit.

In the optical scanning device according to the aspect of the present invention, the optical scanner is driven by the optical scanner drive unit to scan the light from the light source. The optical scanner sensor unit outputs an optical scanner sensor signal corresponding to a deflection angle of the optical scanner (mirror), so that the deflection angle of the mirror in operation can be detected. In addition, since the optical sensor unit detects the light from the light source to output an optical sensor signal, a light emission timing can be detected.

The delay processing unit inputs the delay detection signal to at least one of the optical scanner sensor correction unit and the optical sensor correction unit, and computes the output delay of each of the optical scanner sensor correction unit and the optical sensor correction unit. In this case, since the optical scanner sensor correction unit and the optical sensor correction unit have the same response delay time as the optical scanner sensor unit and the optical sensor unit, respectively, correction is performed using the computed delay time. That is, it is possible to accurately correct the delay in the response time or the driving control of the optical scanner and the light source regardless of the driving condition or the ambient temperature.

In addition, a correction method of a mirror drive timing of a device, which includes an optical scanner having a mirror configured to scan light, an optical scanner drive unit configured to output an optical scanner drive signal to the optical scanner to drive the optical scanner, and an optical scanner sensor unit configured to output an optical scanner sensor signal corresponding to a deflection angle of the optical scanner, according to an aspect of the present invention includes:
acquiring a time from an output of the optical scanner drive signal to an output of the optical scanner sensor signal; acquiring an optical scanner sensor reproduction response delay time obtained by reproducing a response delay caused by the optical scanner sensor unit; and calculating a response time until the optical scanner reaches a deflection angle corresponding to the optical scanner drive signal by subtracting the optical scanner sensor reproduction response delay time from the time from the output of the optical scanner drive signal to the output of the optical scanner sensor signal.

In the correction method of a mirror drive timing according to the aspect of the present invention, first, the time (time T1) from the output of the optical scanner drive signal to the output of the optical scanner sensor signal is acquired. Next, the optical scanner sensor reproduction response delay time (time T2) obtained by reproducing the response delay of the optical scanner sensor unit is acquired.

Finally, the optical scanner sensor reproduction response delay time (time T2) is subtracted from the time (time T1) from the output of the optical scanner drive signal to the output of the optical scanner sensor signal. Accordingly, since the response time (time T1-T2) until the optical scanner (mirror) reaches the deflection angle corresponding to the optical scanner drive signal, it is possible to accurately correct the delay in the response time of the optical scanner regardless of the driving condition or the ambient temperature.

In addition, a correction method of a light source drive timing of a device, which includes a light source, a light source drive unit configured to output a light source drive signal to the light source to cause the light source to emit light, and an optical sensor unit configured to detect the light from the light source to output an optical sensor signal, according to an aspect of the present invention includes:
acquiring a time from an output of the light source drive signal to an output of the optical sensor signal; acquiring an optical sensor reproduction response delay time obtained by reproducing a response delay caused by the optical sensor unit; and calculating a response time until the light source emits the light caused by the light source drive signal by subtracting the optical sensor reproduction response delay time from the time from the output of the light source drive signal to the output of the optical sensor signal.

In the correction method of a light source drive timing according to the aspect of the present invention, first, the time (time T3) from an output of an optical scanner drive signal to the output of the optical scanner sensor signal is acquired. Next, the optical sensor reproduction response delay time (time T4) obtained by reproducing the response delay of the optical sensor unit is acquired.

Finally, the optical sensor reproduction response delay time (time T4) is subtracted from the time (time T3) from the output of the optical scanner drive signal to the output of the optical scanner sensor signal. Accordingly, since the response time (time T3-T4) until the light source emits the light caused by the light source drive signal can be calculated, it is possible to accurately correct the delay in the response time of the light source regardless of the driving condition or the ambient temperature.

### Brief Description of Drawings

FIG. 1 is a schematic diagram of an optical scanning device according to the present invention.
FIG. 2 is a block diagram of an optical system of the optical scanning device.
FIG. 3 is a diagram illustrating details of a delay processing unit and a sensor correction unit.
FIG. 4 is a schematic diagram of an optical scanning device (modification example) according to the present invention.

### Description of Embodiments

Hereinafter, preferred embodiments of the present invention will be described, but these embodiments may be appropriately modified and combined. In addition, in the following description and the accompanying drawings, substantially the same or equivalent parts will be described with the same reference numerals.

### [Embodiment]

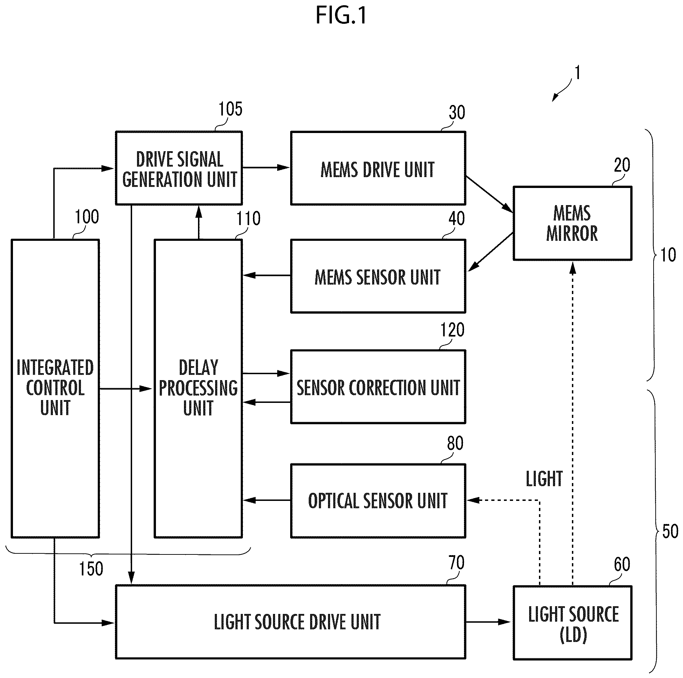

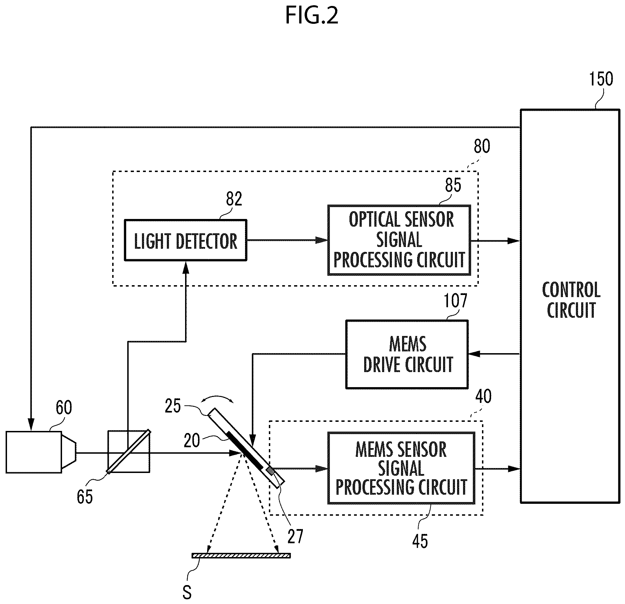

FIG. 1 is a schematic diagram of an optical scanning device 1 according to an embodiment of the present invention. In addition, FIG. 2 is a block diagram of an optical system of the optical scanning device 1. The optical scanning device 1 mainly includes a mirror drive device 10 and a light source device 50.

As illustrated in FIG. 1, the mirror drive device 10 includes a MEMS mirror 20, a MEMS drive unit 30, a MEMS sensor unit 40, an integrated control unit 100, a drive signal generation unit 105, a delay processing unit 110, and a sensor correction unit 120. A part including the integrated control unit 100, the drive signal generation unit 105, and the delay processing unit 110 may be referred to as a control circuit 150.

The MEMS mirror 20 is a rotating mirror that reflects laser light incident from a certain direction and performs scanning. The MEMS mirror 20 is provided in a light deflector 25 and may reciprocate and rotate around at least one axis.

The light deflector 25 according to the present embodiment is a device manufactured using a semiconductor process or MEMS technique. The light deflector 25 has, for example, a semi-annular piezoelectric actuator, a torsion bar, and a bellows-type piezoelectric actuator that constitute the MEMS drive unit 30 (an "optical scanner drive unit" according to the present invention). In this case, the semi-annular piezoelectric actuator is resonantly driven (in a horizontal direction) and the bellows-type piezoelectric actuator is not resonantly driven (in a vertical direction), so that incident light can be scanned in two-axial directions perpendicular to each other.

The integrated control unit 100 causes the drive signal generation unit 105 to generate a drive signal of the MEMS mirror 20 and transmits the drive signal to the MEMS drive unit 30 to operate the MEMS mirror 20. When the laser light is incident on the MEMS mirror 20 in operation, the laser light is scanned, and a video is projected.

As illustrated in FIG. 2, the MEMS sensor unit 40 (an "optical scanner sensor unit" according to the present invention) includes a piezoelectric sensor 27 provided in the light deflector 25 and a MEMS sensor signal processing circuit 45 (an "optical scanner sensor signal processing circuit" according to the present invention). The MEMS sensor unit 40 detects a deflection angle of the MEMS mirror 20 by the piezoelectric sensor 27, and generates a sensor signal corresponding to the deflection angle by the MEMS sensor signal processing circuit 45. Further, the MEMS sensor signal processing circuit 45 outputs the sensor signal to the control circuit 150 (delay processing unit 110).

Although details will be described later, the delay processing unit 110 inputs a delay detection signal to the MEMS sensor correction circuit 126 (an "optical scanner sensor correction unit" according to the present invention) of the sensor correction unit 120 to compute an output delay.

The MEMS sensor correction circuit 126 has equivalent response characteristics (in particular, the same delay time) as the MEMS sensor unit 40. The expression "same delay time" herein is not limited to a case where the delay times are completely the same. The expression "same delay time" includes a delay time that is negligible in relation to a response time of an output signal with respect to an input signal of a sensor circuit or the like, or a delay time that is substantially the same within a certain error range (the same applies below).

The MEMS sensor correction circuit 126 is formed by integrating, for example, a circuit equivalent to the response characteristics of the piezoelectric sensor 27 and an electrical circuit equivalent to the response characteristics of the MEMS sensor signal processing circuit 45. The expression "circuit equivalent to the response characteristics" herein includes a circuit in which a change in the response characteristics with respect to the driving condition, the ambient temperature, and the like is equivalent.

Therefore, the MEMS sensor correction circuit 126 can correct a phase difference between the drive signal of the MEMS mirror 20 and the sensor signal of the piezoelectric sensor 27. That is, the delay in the response time or the driving control of the MEMS mirror 20 can be accurately corrected regardless of the driving condition or the ambient temperature.

A laser diode that emits a pulse of light is used as a light source 60 according to the present embodiment. A color of the laser light may be monochromatic or a mixture of multiple colors. The integrated control unit 100 transmits the control signal to the light source drive unit 70, and the light source drive unit 70 causes the light source 60 to emit the light.

Specifically, the laser light emitted from the light source 60 passes through a half mirror 65 and is incident on the MEMS mirror 20 (see FIG. 2). The MEMS mirror 20 projects an image on a screen S by scanning the incident light.

The optical sensor unit 80 includes a light detector 82 and an optical sensor signal processing circuit 85. The laser light reflected by the half mirror 65 is detected by the light detector 82. The optical sensor unit 80 generates an optical sensor signal corresponding to a detection timing of the laser light by the optical sensor signal processing circuit 85 to output the optical sensor signal to the control circuit 150 (delay processing unit 110).

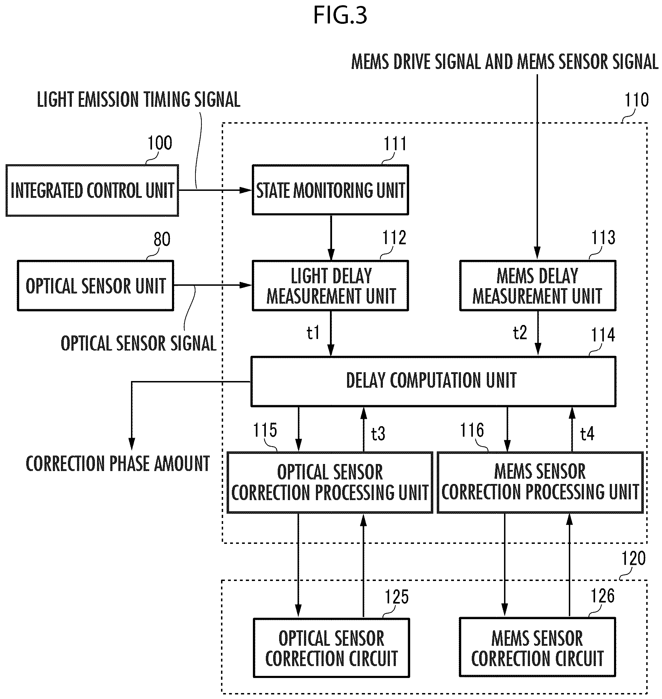

FIG. 3 illustrates details of the delay processing unit 110 and a sensor correction unit 120.

The delay processing unit 110 includes a state monitoring unit 111, a light delay measurement unit 112, a MEMS delay measurement unit 113, a delay computation unit 114, an optical sensor correction processing unit 115, and a MEMS sensor correction processing unit 116.

The state monitoring unit 111 monitors an input of a light emission timing signal from the integrated control unit 100. The light emission timing signal is, for example, a signal generated at the same time as or immediately after an instruction to emit the laser light is given. Then, the state monitoring unit 111 transmits the light emission timing signal to the light delay measurement unit 112.

The light emission timing signal is not limited to the signal generated at the same time as or immediately after the instruction to emit the laser light is given, as long as a delay time from a timing at which the instruction to emit the light is given is known.

The light delay measurement unit 112 receives the light emission timing signal and the optical sensor signal from the optical sensor unit 80. As a result, the light delay measurement unit 112 can measure a delay time t1 from the instruction to emit the light to the detection of the light by the optical sensor unit 80.

On the other hand, the MEMS delay measurement unit 113 measures a delay time t2 by receiving a MEMS drive signal and a MEMS sensor signal. The delay times t1 and t2 are transmitted together to the delay computation unit 114.

In addition, the optical sensor correction processing unit 115 outputs a signal (for example, a pulse signal) to the optical sensor correction circuit 125 (an "optical sensor correction unit" according to the present invention) of the sensor correction unit 120 to measure a delay time t3 (an "optical sensor reproduction response delay time" according to the present invention) until the signal is returned.

In this case, since the optical sensor correction circuit 125 has the response characteristics equivalent to the optical sensor unit 80, a signal having the same phase difference as the optical sensor unit 80 with respect to the input signal is output. Accordingly, the delay time t3 can be regarded as the same value as the delay time of the optical sensor unit 80.

The optical sensor correction circuit 125 includes, for example, a circuit in which the circuit equivalent to the response characteristics of the light detector 82 and the electrical circuit equivalent to the response characteristics of the optical sensor signal processing circuit 85 are integrated.

Similarly, the MEMS sensor correction processing unit 116 outputs a signal (for example, the same frequency signal) to the MEMS sensor correction circuit 126 (a "MEMS sensor correction unit" according to the present invention) of the sensor correction unit 120 to measure a delay time t4 (an "optical scanner sensor reproduction response delay time" according to the present invention) until the signal is returned.

In this case, since the MEMS sensor correction circuit 126 has the response characteristics equivalent to the MEMS sensor unit 40 (the MEMS sensor signal processing circuit 45), a signal having the same phase difference as the MEMS sensor unit 40 with respect to the input signal is output. Accordingly, the delay time t4 can be regarded as the same value as the delay time of the MEMS sensor unit 40.

The delay processing unit 110 computes and outputs a correction phase amount of the driving of the MEMS mirror 20 and the control of the light source 60 from the delay times t1 to t4. As for the MEMS mirror 20, a delay time excluding an influence of the response characteristics of the MEMS sensor unit 40 is obtained by subtracting the delay time t4 from the delay time t2.

In addition, as for the light source 60, a delay time excluding an influence of the response characteristics of the optical sensor unit 80 is obtained by subtracting the delay time t3 from the delay time t1.

The delay processing unit 110 is connected to the drive signal generation unit 105 (see FIG. 1). The drive signal generation unit 105 generates a drive signal for the MEMS mirror 20 and a drive signal for the light source 60 in which a phase is shifted by the same amount as the correction phase amount of the drive signal, based on the correction phase amount.

The optical scanning device 1 generates a new drive signal by the above processing to correct an operation of the MEMS mirror 20 and the light emission timing of the light source 60. As a result, it is possible to adjust a time difference in the response time or the driving control between the MEMS mirror 20 and the light source 60 with high accuracy. When the operation of the MEMS mirror 20 and the light emission timing of the light source 60 are shifted from each other, for example, when the laser light is scanned only in one direction and an optical image is to be projected to a center of the screen S (projection region), the optical image is projected while being shifted from the center of the screen S, but the optical image appears in a center portion of the screen S by correcting the shift in the timing.

This correction processing may be periodically executed at the time of start-up of the optical scanning device 1 or the like, or may be executed in accordance with a change in an external environment. In addition, the optical scanning device 1 can appropriately determine a timing of executing the processing such as performing the correction processing (correction of the light emission timing of the light source 60) when only the MEMS mirror 20 is resonantly driven.

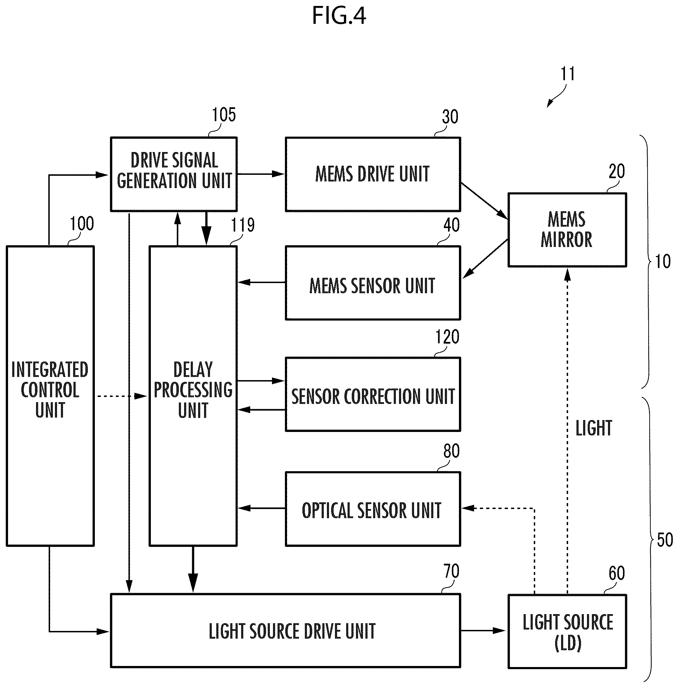

FIG. 4 is a schematic diagram illustrating an optical scanning device 11 according to a modification example of the present invention.

The present invention can also adopt the configuration illustrated in FIG. 4. A difference from the embodiment illustrated in FIG. 1 is that the drive signal generation unit 105 transmits a signal indicating whether or not the MEMS mirror 20 is driven toward a delay processing unit 119.

In addition, the delay processing unit 119 transmits the drive signal to the light source drive unit 70. Accordingly, it is possible to control a light emission start timing of the light source 60.

According to the modification example, it is not necessary to perform the control of the start of light emission by an external element such as the integrated control unit 100. In addition, it is possible to simplify a processing capacity of an external control device and a communication path, and it is easy to modularize the present invention.

Hereinabove, although the optical scanning devices 1 and 11 according to the present embodiment has been described, the present invention is not limited to the above-described embodiment, and can be carried out in various aspects within the scope not departing from the gist thereof.

The present invention is mainly applied to a laser scanning-type projection device including a MEMS mirror, but can also be applied to a lamp or LiDAR device for a vehicle including a MEMS mirror.

The above-described correction processing can be executed for each of the single mirror drive device 10 and the single light source device 50 by using the MEMS sensor correction circuit 126 and the optical sensor correction circuit 125, respectively.

### Description of Reference Numerals

- 1, 11: optical scanning device
- 10: mirror drive device
- 20: MEMS mirror
- 25: light deflector
- 27: piezoelectric sensor
- 30: MEMS drive unit
- 40: MEMS sensor unit
- 45: MEMS sensor signal processing circuit
- 50: light source device
- 60: light source
- 65: half mirror
- 70: light source drive unit
- 80: optical sensor unit
- 82: light detector
- 85: optical sensor signal processing circuit
- 100: integrated control unit
- 105: drive signal generation unit
- 110, 119: delay processing unit
- 111: state monitoring unit
- 112: light delay measurement unit
- 113: MEMS delay measurement unit
- 114: delay computation unit
- 115: optical sensor correction processing unit
- 116: MEMS sensor correction processing unit
- 120: sensor correction unit
- 125: optical sensor correction circuit
- 126: MEMS sensor correction circuit
- 150: control circuit

## Claims

1. A mirror drive device comprising:
an optical scanner having a mirror configured to scan light;
an optical scanner drive unit configured to output a drive signal to the optical scanner to drive the optical scanner;
an optical scanner sensor unit configured to output an optical scanner sensor signal corresponding to a deflection angle of the optical scanner;
an optical scanner sensor correction unit having the same response delay time as the optical scanner sensor unit; and
a delay processing unit configured to input a delay detection signal to the optical scanner sensor correction unit to compute an output delay.

2. The mirror drive device according to Claim 1,
wherein the optical scanner sensor unit includes a piezoelectric sensor and an optical scanner sensor signal processing circuit, and
the optical scanner sensor correction unit is a circuit having the same response delay time as both the piezoelectric sensor and the optical scanner sensor signal processing circuit.

3. A light source device comprising:
a light source;
a light source drive unit configured to output a drive signal to the light source to cause the light source to emit light;
an optical sensor unit configured to detect the light from the light source to output an optical sensor signal;
an optical sensor correction unit having the same response delay time as the optical sensor unit; and
a delay processing unit configured to input a delay detection signal to the optical sensor correction unit to compute an output delay.

4. The light source device according to Claim 3,
wherein the optical sensor unit includes a light detector and an optical sensor signal processing circuit, and
the optical sensor correction unit is a circuit having the same response delay time as both the light detector and the optical sensor signal processing circuit.

5. An optical scanning device comprising:
an optical scanner having a mirror configured to scan light;
an optical scanner drive unit configured to output a drive signal to the optical scanner to drive the optical scanner;
an optical scanner sensor unit configured to output an optical scanner sensor signal corresponding to a deflection angle of the optical scanner;
an optical scanner sensor correction unit having the same response delay time as the optical scanner sensor unit;
a light source;
a light source drive unit configured to output a light source drive signal to the light source to cause the light source to emit light;
an optical sensor unit configured to detect the light from the light source to output an optical sensor signal;
an optical sensor correction unit having the same response delay time as the optical sensor unit; and
a delay processing unit configured to input a delay detection signal to at least one of the optical scanner sensor correction unit and the optical sensor correction unit to compute an output delay of each of the optical scanner sensor correction unit and the optical sensor correction unit.

6. The optical scanning device according to Claim 5,
wherein the optical sensor correction unit corrects the output delay during a period in which the optical scanner is resonantly driven.

7. A correction method of a mirror drive timing of a device including an optical scanner having a mirror configured to scan light, an optical scanner drive unit configured to output an optical scanner drive signal to the optical scanner to drive the optical scanner, and an optical scanner sensor unit configured to output an optical scanner sensor signal corresponding to a deflection angle of the optical scanner, the correction method comprising:
acquiring a time from an output of the optical scanner drive signal to an output of the optical scanner sensor signal;
acquiring an optical scanner sensor reproduction response delay time obtained by reproducing a response delay caused by the optical scanner sensor unit; and
calculating a response time until the optical scanner reaches a deflection angle corresponding to the optical scanner drive signal by subtracting the optical scanner sensor reproduction response delay time from the time from the output of the optical scanner drive signal to the output of the optical scanner sensor signal.

8. A correction method of a light source drive timing of a device including a light source, a light source drive unit configured to output a light source drive signal to the light source to cause the light source to emit light, and an optical sensor unit configured to detect the light from the light source to output an optical sensor signal, the correction method comprising:
acquiring a time from an output of the light source drive signal to an output of the optical sensor signal;
acquiring an optical sensor reproduction response delay time obtained by reproducing a response delay caused by the optical sensor unit; and
calculating a response time until the light source emits the light caused by the light source drive signal by subtracting the optical sensor reproduction response delay time from the time from the output of the light source drive signal to the output of the optical sensor signal.
